# EUROPEAN PATENT SPECIFICATION

(11) **EP 1 072 932 B1**
(45) Date of publication and mention of the grant of the patent: **10.10.2007**
(21) Application number: 00116308.8
(22) Date of filing: 27.07.2000
(51) Int. Cl.: G02F 1/1339

(54) **Liquid crystal device, production process thereof and spacer-bearing substrate**
Flüssigkristallvorrichtung, Verfahren zu ihrer Herstellung und abstandshaltertragendes Substrat
Dispositif à cristal liquide, procédé pour sa fabrication et substrat portant des éléments d'espacement

(30) Priority: 29.07.1999 JP 21481199; 09.09.1999 JP 25500999; 13.09.1999 JP 25943599; 07.10.1999 JP 28615899; 18.10.1999 JP 29551799
(43) Date of publication of application: 31.01.2001
(73) Proprietor: CANON KABUSHIKI KAISHA, Tokyo (JP)
(72) Inventor: Hirose, Masashi, c/o CANON K. K., Tokyo (JP); Shirota, Katsuhiro, c/o CANON K. K., Tokyo (JP); Miyazaki, Takeshi, c/o CANON K. K., Tokyo (JP); Kashiwazaki, Akio, c/o CANON K. K., Tokyo (JP); Nakazawa, Koichiro, c/o CANON K. K., Tokyo (JP); Yamashita, Yoshihisa, c/o CANON K. K., Tokyo (JP)
(74) Representative: Weser, Wolfgang

(56) References cited:
- US-A- 5 177 629
- PATENT ABSTRACTS OF JAPAN vol. 1997, no. 08, 29 August 1997 (1997-08-29) & JP 09 105946 A (TOSHIBA CORP), 22 April 1997 (1997-04-22)
- TAMAI K ET AL: "SPACER POSITIONING FOR FLAT PANEL DISPLAY BY INK JET PRINTING" PROCEEDINGS OF THE 18TH. INTERNATIONAL DISPLAY RESEARCH CONFERENCE. ASIA DISPLAY 98. SEOUL, SEPT. 28 - OCT. 1, 1998, INTERNATIONAL DISPLAY RESEARCH CONFERENCE. IDRC, SAN JOSE, CA: SID, US, vol. CONF. 18, 28 October 1998 (1998-10-28), pages 203-206, XP000921797
- PATENT ABSTRACTS OF JAPAN vol. 1999, no. 04, 30 April 1999 (1999-04-30) & JP 11 007028 A (ASAHI GLASS CO LTD), 12 January 1999 (1999-01-12)
- HAYES D. ET AL: 'LOW-COST DISPLAY ASSEMBLY AND INTERCONNECT USING INK-JET PRINTING TECHNOLOGY' JOURNAL OF THE SOCIETY FOR INFORMATION DISPLAY vol. 9, no. 1, 15 February 1999, pages 9 - 13, XP009019680

## Description

### BACKGROUND OF THE INVENTION

### Field of the Invention

The present invention relates to a production process of a liquid crystal device suitable for use in color televisions, personal computers and the like, a liquid crystal device produced by the production process and a substrate which is a constituent member of the liquid crystal device.

### Related Background Art

With the advancement of personal computers, particularly, portable personal computers in recent years, the demand for color liquid crystal display devices tends to increase. It is however necessary to reduce the manufacturing cost of the color liquid crystal display devices for further spreading them.

In a conventional production process of a liquid crystal device, a device for driving a liquid crystal, such as a TFT (thin film transistor), or an optical device for coloring, such as a color filter is provided on a pair of glass substrates which are transparent insulating substrates, and both transparent electrode and orientation film are then formed on each of the substrates. Spherical or cylindrical particles composed of silica, alumina, a synthetic resin or the like and having a particle diameter of about 3 to 10 µm are then dispersed as a spacer on the whole surface of one of the glass substrates on which the transparent electrode and orientation film have been formed. The pair of glass substrates are superimposed on each other through the spacer thus formed with the transparent electrodes opposed to each other, and a liquid crystal is enclosed in a space between the substrates, thereby producing a liquid crystal device.

However, since a state of transmission/shading varies in effective pixel portions according to display condition, each spacer is observed as a bright point upon shading when the spacer is formed with a colorless, transparent material, or as a black point upon transmission when the spacer is colored black, which has caused a problem that display quality is deteriorated.

In order to solve the above problem, there has been proposed a process in which an orientation film is subjected to an orientation treatment and then coated with a photosensitive polyimide or photoresist to conduct exposure through a mask, thereby forming spacers composed of the polyimide or photoresist at other portions than effective pixel portions as shown in Japanese Patent Application Laid-Open No. 61-173221, Japanese Patent Application Laid-Open No. 2-223922 or the like. According to this process, the spacer can be formed at arbitrary places with an arbitrary density, so that unevenness of cell gap in the liquid crystal device when a liquid crystal is enclosed can be improved. In Japanese Patent Application Laid-Open No. 3-94230, is described a process for fixing a spacer comprising beads on a shading layer in another region than effective pixel portions.

Besides, there have been proposed methods in which a black matrix great in film thickness is used as a spacer (Japanese Patent Application Laid-Open Nos. 63-237032, 3-184022 and 4-122914), in which an overlapped colored resist is used as a spacer (Japanese Patent Application Laid-Open No. 63-82405), and in which a colored pattern is also formed on a black matrix to use it as a spacer (Japanese Patent Application Laid-Open No. 63-237032).

All the improving methods proposed in the above publications are methods making use of photolithography and hence have involved problems that an expensive exposure apparatus is required, and a production line is elongated due to introduction of a wet process such as development.

In the above improving methods, it is necessary to directly apply the photosensitive polyimide or photoresist on to an orientation film formed of a polyimide film subjected to an orientation treatment by a rubbing process or the like and remove an unnecessary portion thereof with a solvent or the like after exposure. These steps may markedly contaminate or break the state of orientation of the oriented film in some cases, and so there is a possibility that the orientation of a liquid crystal injected into a liquid crystal cell may be made uneven.

JP-A- No. 09 105946 discloses a liquid crystal display element and its production. Therein it is intended to obtain a liquid crystal display element having the highest possible display grade by providing the production process with a stage for applying a liquid mixture composed of spacers for adjusting the spacing between two sheets of substrates formed respectively with oriented films and a resin by using an ink jet nozzle in the described position of at least one substrate of these substrates and a stage for curing the resin.

Asia Display (98), pp. 203-206, discloses spacer positioning for flat panel by ink jet printing, wherein an ink jet printing system with drop on demand type heads has been developed for spacer positioning of flat panel displays.

JP-A- 11007028 discloses a spacer discharging device and liquid crystal display element manufacturing method. Therein it is intended to enhance the accuracy of an impact position and to stabilize the discharging amount of spacers over a long period by connecting a stirring tank in which a solution containing spacers is housed with an ink-jet head and stirring the solution containing the spacers being in the stirring tank by an ultrasonic wave.

US-A-5 177 629 discloses a liquid display crystal display with an optical fluid layer, wherein a liquid crystal display panel construction includes a matrix of liquid crystal elements and a layer of optical fluid extending substantially in plane parallel to the matrix of liquid crystal elements, for improving the optical characteristics of the panel.

### SUMMARY OF THE INVENTION

It is an object of the present invention to solve the above problems and provide a process for producing a liquid crystal device free of influence of a spacer on both effective pixel portions and non-effective pixel portions from the viewpoint of display and excellent in display quality without increase in cost.

The above object is achieved by the process for producing a spacer-bearing substrate according to claim 1. The dependent claims relate to further developments.

### BRIEF DESCRIPTION OF THE DRAWINGS

Figs. 1A, 1B, 1C, 1D, 1E, 1F and 1G are flow charts illustrating a production process of a liquid crystal device according to an embodiment of the present invention.
Fig. 2 illustrates how to form a spacer by ejecting a curable, spacer-forming material plural times.
Fig. 3 illustrates an exemplary target shape of a spacer.
Fig. 4 illustrates the construction of an abrading device for abrading a spacer.
Fig. 5 illustrates another exemplary target shape of a spacer.
Fig. 6 is a schematic cross-sectional view illustrating a spacer-bearing substrate according to an embodiment of the present invention.
Fig. 7 is a schematic cross-sectional view illustrating a liquid crystal device according to an embodiment of the present invention.
Fig. 8 is a schematic cross-sectional view illustrating a liquid crystal device according to another embodiment of the present invention.
Figs. 9A, 9B, 9C, 9D, 9E, 9F and 9G are flow charts illustrating a production process of a liquid crystal device according to another embodiment of the present invention.
Fig. 10 is a schematic cross-sectional view illustrating a liquid crystal device according to a further embodiment of the present invention.
Figs. 11A, 11B, 11C, 11D, 11E and 11F are flow charts illustrating a production process of a liquid crystal device according to a further embodiment of the present invention.
Fig. 12 is a schematic cross-sectional view illustrating a spacer-bearing substrate according to another embodiment of the present invention.

### DESCRIPTION OF THE PREFERRED EMBODIMENTS

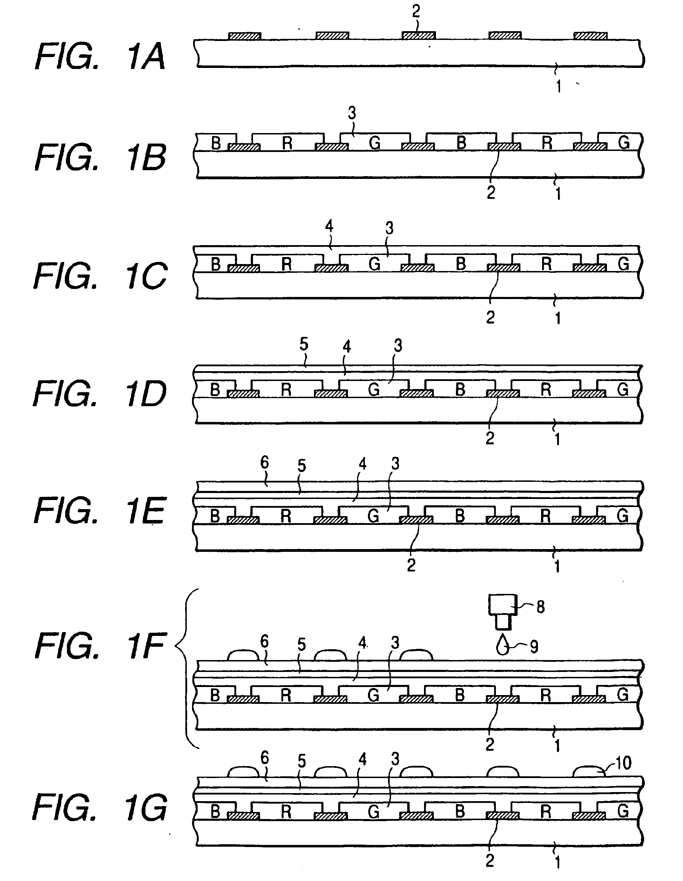

Figs. 1A to 1G schematically illustrate steps up to the formation of a spacer-bearing substrate in a production process of a liquid crystal device according to an embodiment of the present invention. This embodiment is the case where one substrate is constituted by a color filter with a colored layer and a protective layer provided on a transparent substrate, and a spacer is formed on this substrate. In Figs. 1A to 1G, reference numeral 1 indicates a transparent substrate, 2 a black matrix, 3 a colored layer, 4 a protective layer, 5 a transparent electrode, 6 an orientation film, 8 an ink-jet head, 9 a curable, spacer-forming material, and 10 a spacer.
Incidentally, Figs. 1A to 1G are schematic cross-sectional views corresponding to the following Steps (a) through (g), respectively.

In the following description, a system that a spacer-forming material is ejected in place of an ink according to the conventionally known ink-jet system is referred to as the ink-jet system for the sake of convenience. The spacer-forming material means a material which will serve as a spacer after curing.

### Step (a):

A black matrix 2 is formed on a transparent substrate 1 as needed. For the transparent substrate 1 in the present invention, a glass sheet is generally used. However, the substrate is not limited to the glass substrate so far as it has properties required of a liquid crystal device, such as transparency and mechanical strength, and a plastic substrate may also be used.

No particular limitation is imposed on the black matrix 2, and any publicly known black matrix may be used. For example, the black matrix can be formed by etching a laminated film of a metal such as Cr or a metal oxide formed on the transparent substrate 1 in a pattern shape, or by patterning a black resist coated on the transparent substrate 1.

### Step (b):

A colored layer 3 composed of colored patterns of red (R), green (G) and blue (B) is formed on the transparent substrate. No particular limitation is imposed on a process for forming the colored layer 3 in the present invention, and any publicly known technique may be used. Examples thereof include a pigment dispersing process using photosetting resin compositions in which a pigment has been dispersed, a dyeing process comprising dyeing a resin film formed on a substrate with dyes, an electrodeposition process comprising electrodepositing colored compositions on an electroconductive substrate while energizing the substrate, thereby forming a colored layer, a printing process putting a printing technique into practice, and a thermal transfer process putting a thermal transfer technique into practice. A process making good use of an ink-jet system, by which a colored layer composed of 3 colored patterns can be formed at the same time by a single step, is desirable from the viewpoint of cost.

It is not always necessary to provide the colored layer 3 on a substrate on which a spacer 10 will be formed, and it is only necessary to form it on any one of a pair of substrates making up a liquid crystal device.

### Step (c):

A protective layer 4 is formed as needed. For the protective layer 4, may be used a resin layer capable of curing by light irradiation, heat treatment or a combination thereof, or an inorganic film formed by vapor deposition or sputtering. However, any layer or film may be used so far as it has sufficient transparency to be used in a color filter and withstands subsequent ITO film-forming step, orientated-film-forming step and the like.

### Step (d):

A transparent electroconductive film (electrode) 5 is formed as needed. For the transparent electroconductive film 5, is generally used an ITO film formed by sputtering or the like. However, the transparent electroconductive film 5 is not particularly limited to the ITO film, and a forming process thereof is also not limited in any way.

### Step (e):

An orientation film 6 is formed in advance as needed. No particular limitation is imposed on the process and material for forming the orientation film 6, and any publicly known process and material may be used. The orientation film 6 may also be suitably subjected to a rubbing treatment by any publicly known method in advance.

### Step (f):

The substrate is set into a spacer-writing machine to conduct substrate alignment utilizing alignment marks (not illustrated) used in the formation of the colored layer 3, thereby ejecting a curable, spacer-forming material 9 onto effective pixel portions by means of an ink-jet head.

The curable, spacer-forming material 9 will become a spacer after curing. For such a material, any material may be used so far as it contains a curable component and is capable of being ejected by means of an ink-jet head and being cured by a post treatment. The curable, spacer-forming material 9 preferably contains a homopolymer of one of such monomers as mentioned below or a copolymer of such a monomer with another vinyl monomer, and the content of such a polymer is 0.01 to 30 % by weight, more preferably 0.1 to 15 % by weight, particularly desirably 0.1 to 10 % by weight.

Examples of the monomer which is a component of the polymer or copolymer contained in the curable, spacer-forming material 9 include N,N-dimethylolacrylamide, N,N-dimethoxymethylacrylamide, N,N-diethoxy-methylacrylamide, N,N-dimethylolmethacrylamide, N,N-dimethoxymethylmethacrylamide and N,N-diethoxymethylmethacrylamide. However, the monomers are not limited thereto. These monomers are used in the form of homopolymers or copolymers with other vinyl monomers. Examples of other vinyl monomers include acrylic acid, methacrylic acid, acrylic esters such as methyl acrylate and ethyl acrylate, methacrylic esters such as methyl methacrylate and ethyl methacrylate, hydroxyl group-containing vinyl monomers such as hydroxymethyl methacrylate, hydroxyethyl methacrylate, hydroxymethyl acrylate and hydroxyethyl acrylate, and besides styrene, α-methylstyrene, acrylamide, methacrylamide, acrylonitrile, allyamine, vinylamine, vinyl acetate and vinyl propionate.

The copolymerizing proportion, in terms of % by weight, of the above monomer to another vinyl monomer is preferably from 100 %:0 % to 5 %:95 %, particularly desirably from 90 %:10 % to 10 %:90 %.

When the curable, spacer-forming material is cured by light, various kinds of photosetting resins and photopolymerization initiators may be added thereto. In addition, various kinds of commercially-available resins and additives may be added as other components so far as they do not cause problems of crusting and the like in the curable, spacer-forming material. Specifically, acrylic resins, epoxy resins and the like are preferably used.

The respective components described above are mixed and dissolved in water and/or a publicly known solvent for the preparation of the curable, spacer-forming material. In this process, those known *per se* in the art may be used. Desirably, an additive solvent or an additive such as a surfactant is added according to the material (orientation film 6 in this embodiment) of the surface of the substrate, on which the spacer 10 is formed, to control the diameter of a dot formed by the curable, spacer-forming material 9 ejected, whereby the diameter of the spacer 10 can be controlled.

For the ink-jet system used in the present invention, a bubble-jet type making use of an electrothermal converter as an energy-generating element or a piezo-jet type making use of a piezoelectric element may be used. The shot-in quantity of the curable, spacer-forming material 9 may be arbitrarily preset. Although the shot-in position of the curable, spacer-forming material 9 may also be arbitrarily preset, it is preferably shot in a position overlapping with the black matrix.

A cell gap in a liquid crystal device is generally 2 to 10 µm. In the present invention also, a spacer having a height within this range is preferably formed.

The spacer may be formed only at positions necessary to hold a cell gap upon fabrication of a liquid crystal device with a plurality of spacers dispersed in the form of a dot or line in the substrate. Each spacer is preferably formed in a substantially cylindrical shape.

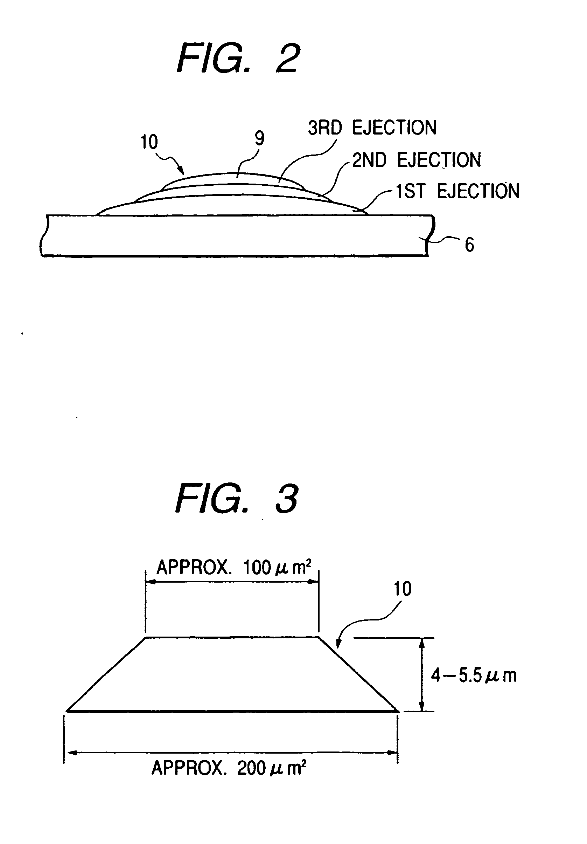

In Step (f), the curable, spacer-forming material 9 is ejected plural times at the same position on the substrate by the ink-jet head 8 to overlap each other as illustrated in Fig. 2, thereby forming the spacer 10. The reason for it is that when the curable, spacer-forming material 9 is ejected only once, the curable, spacer-forming material 9 may spread on the orientation film 6 to fail to achieve the height required as a spacer in some cases. Incidentally, when the curable, spacer-forming material 9 is ejected plural times at the same position as described above, the amount of the curable, spacer-forming material ejected later is made less, or after the curable, spacer-forming material 9 ejected earlier is cured to some extent, the curable, spacer-forming material 9 is further ejected thereon, whereby the height necessary for the spacer is achieved with greater ease.

Fig. 3 is a sectional side elevation illustrating an exemplary target shape of a spacer. It is preferred from the viewpoint of achieving the height necessary for the spacer that the amount of the curable, spacer-forming material ejected later be made less as illustrated in Fig. 2 to form the spacer into such a trapezoid as illustrated in Fig. 3.

Incidentally, the embodiment illustrated in Fig. 2 shows a case where the curable, spacer-forming material 9 is ejected 3 times at the same position on the substrate to form the spacer 10. However, the present invention is not limited to the threefold ejection, but the spacer may be formed by twofold ejection, or fourfold or more ejection.

### Step (g):

The curable, spacer-forming material 9 is cured by light irradiation, heat treatment or both light irradiation and heat treatment to form the spacer 10, thereby obtaining a spacer-bearing substrate according to the present invention. The light irradiation and heat treatment are conducted in accordance with the respective methods known *per se* in the art.

When the spacer requires specially strict evenness, the surface of the spacer 10 may be abraded and flattened according to the following Step (h). In this case, shavings remained after the abrasion are preferably cleaned off in the following Step (i).

### Step (h):

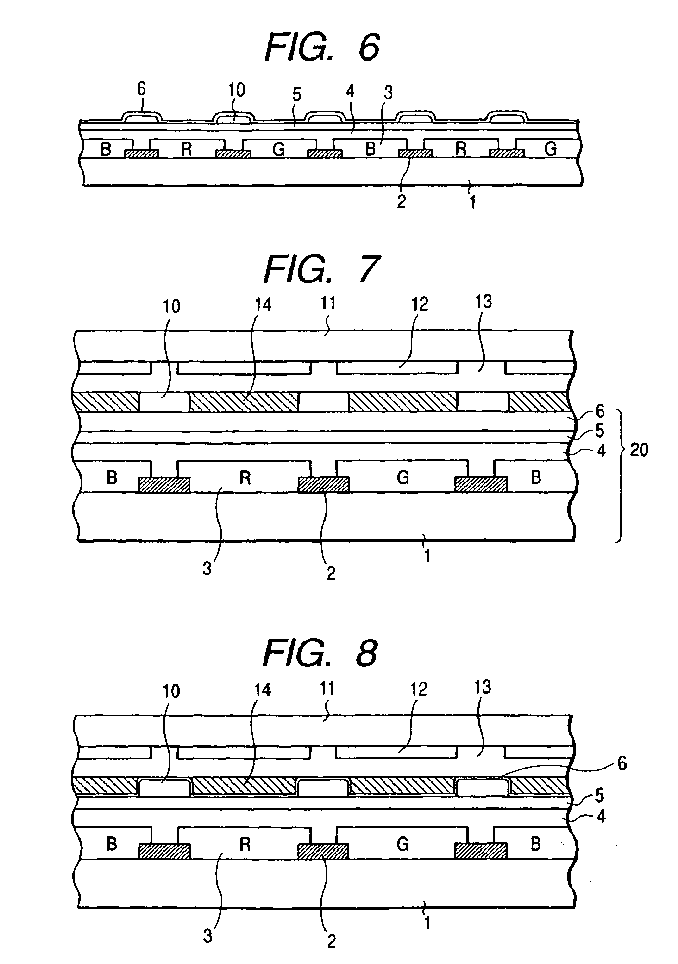

If the top portion of the spacer 10 formed by the ink-jet system is round, an opposed substrate 11 (see Fig. 7) comes into point contact with the top of the spacer 10 when the opposed substrate 10 is bonded under pressure to the spacer-bearing substrate 20 through the spacer 10, so that it is difficult to control a gap length between both substrates. In addition, since the pressure is applied topically, the spacer 10 is easy to deform to cause thickness irregularity of the gap between both substrates. Therefore, the top of the spacer 10 is necessary to be abraded in Step (h) to flatten it. When the top of the spacer 10 is flattened, the pressure is applied uniformly, so that the gap between both substrates can be controlled with high accuracy, thereby producing a liquid crystal display device which scarcely causes display irregularity. Further, even when the shot-in quantity of the spacer-forming material for forming the spacer 10 varies, the height of the spacer 10 can be controlled precisely, and a yield can be enhanced.

In order to flatten the top of the spacer 10, methods such as cutting, hot pressing, tape abrading and buffing are considered, and buffing is most suitable. Incidentally, the buffing means a method in which an abrasive is provided on the surface of an abrading base material, and a part to be abraded is brought into contact with the surface of the base material while rotating the abrading base material on its axis, thereby abrading the surface of the part.

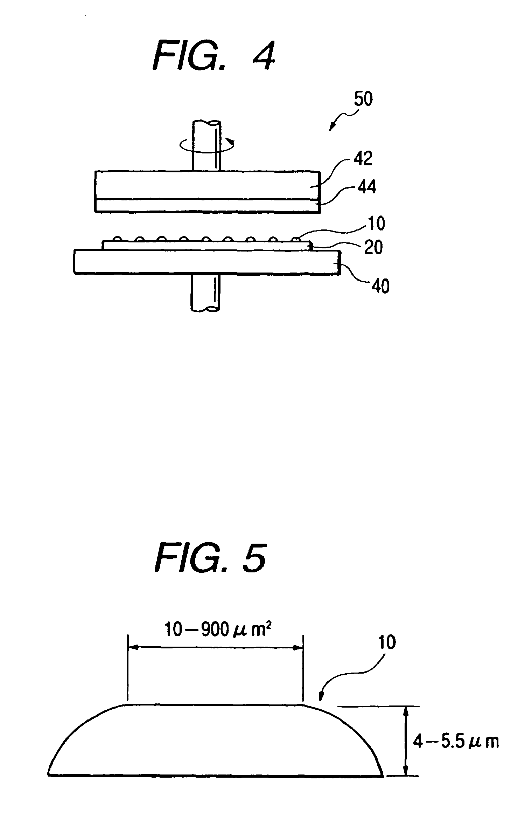

Fig. 4 illustrates the construction of an abrading device used for flattening the top of the spacer 10 by buffing.

The abrading device 10 is equipped with a lower holding part 40 that holds the spacer-bearing substrate 20 by suction, and an upper holding part 42 opposed to the lower holding part 40. To the lower surface of the upper holding part 42, is attached an abrading member 44 with a finely particulate abrasive penetrated into an abrading base material. The upper holding part 42 is rotated on its axis in a state that the abrading member 44 has been brought into contact with the top of the spacer 10, whereby the top of the spacer 10 is flatly abraded. The lower holding part 40 is not rotatably driven, but is rotated with the rotation of the upper holding part 42.

As the abrading base material used in the abrading member 44, a nonwoven fabric, suede, porous body or the like is preferred. In this embodiment, the nonwoven fabric is used.

As the abrasive, is used an inorganic oxide or the like, and an abrasive comprising alumina as a main component is preferred. The particle diameter thereof is preferably about 0.2 µm to 0.3 µm.

Fig. 5 illustrates another exemplary target shape of a spacer 10. As illustrate in Fig. 5, the top of the spacer 10 is preferably abraded into a flat surface having an average area of 10 to 900 µm², preferably 50 to 500 µm², more preferably 70 to 300 µm². If the surface area is smaller than 10 µm², the spacer 10 becomes easy to collapse, so that irregularity may occur in the gap between both substrates in some cases. If the surface area is greater than 900 µm², such a spacer may project from a shading region in some cases. The height of the spacer 10 varies according to a liquid crystal material used. However, in the case of a TN liquid crystal, the top of the spacer 10 is preferably abraded so as to give a height of 4 to 5.5 µm. The above numerical values can be inspected through an optical microscope.

### Step (i):

The spacer-bearing substrate 20 the spacer 10 of which has been abraded in Step (h) is subjected to ultrasonic cleaning for removing shavings by the abrasion, and the like. The ultrasonic cleaning is conducted by, for example, immersing the spacer-bearing substrate 20 in an ultrasonic cleaning bath and applying 100 kHz ultrasonic wave of 250 W for 1 minute.

The orientation film 6 is not always required to be provided before the formation of the spacer 10, but may be provided after the formation of the spacer 10 as illustrated in Fig. 6.

The present invention is practiced by a ink-jet system making use of thermal energy as energy utilized for ejecting the spacer-forming material, whereby high-density and high-definition formation of the spacer can be achieved.

The typical construction and principle thereof preferably follow the basic principle disclosed in, for example, U.S. Patent Nos. 4,723,129 and 4,740,796. This system may be applied to either the so-called on-demand type or continuous type. However, the on-demand type is particularly effective because at least one driving signal that responds to recording information and gives a rapid temperature rise beyond film boiling is applied to an electrothermal converter arranged in opposed relation to a sheet or liquid path in which a liquid (ink) is held, whereby thermal energy is generated by the electrothermal converter to cause film boiling on a heat acting surface of a recording head, and consequently a bubble can be formed in the liquid (ink) in relation of 1 to 1 in response to the driving signal. The liquid (ink) is ejected through an opening for ejection by growth and shrinkage of the bubble to form at least one droplet. It is more preferred that the driving signal be applied in the form of a pulse, since the growth and shrinkage of the bubble are suitably conducted without delay, whereby the liquid (ink) can be ejected with excellent responsiveness in particular.

For the driving signal in the form of a pulse, those described in U.S. Patent Nos. 4,463,359 and 4,345,262 are suitable. Incidentally, when the conditions described in U.S. Patent No. 4,313,124 the invention of which relates to the rate of temperature rise on the heat acting surface are adopted, far excellent recording can be conducted.

For the construction of the recording head, besides such construction composed of a combination of an ejection orifice, a liquid path and an electrothermal converter as disclosed in the above-described respective U.S. Patents (linear liquid path or right-angle liquid path), the construction disclosed in U.S. Patent Nos. 4,558,333 and 4,459,600 that a heat acting surface is arranged in a curved region is also embraced in the present invention. In addition, the construction based on Japanese Patent Application Laid-Open No. 59-123670 disclosing the construction that a slot common to a plurality of electrothermal converters is used as an ejection part of the electrothermal converters, or Japanese Patent Application Laid-Open No. 59-138461 disclosing the construction that an opening absorbing the pressure wave of thermal energy is arranged in opposed relation to an ejection part may also be allowable.

Further, a full-line type recording head having a length corresponding to the width of the greatest recording medium on which recording can be conducted by a recording apparatus may be either the construction that the length is fulfilled by such a combination of plural recording heads as disclosed in the above-described U.S. Patents or the construction as one recording head formed integrally.

Thereafter, the above-described spacer-bearing substrate and an opposed substrate fabricated separately are laminated with a sealant to fabricate a cell, and a liquid crystal is enclosed in the cell, thereby obtaining the liquid crystal elemental device according to the present invention.

Examples of the liquid crystal device according to the present invention are illustrated in Figs. 7 and 8. Fig. 7 is a schematic cross-sectional view illustrating an exemplary liquid crystal device fabricated by using the spacer-bearing substrate according to the present invention illustrated in Fig. 1G. Fig. 8 is a schematic cross-sectional view illustrating an exemplary liquid crystal device fabricated by using the spacer-bearing substrate according to the present invention illustrated in Fig. 6. In Figs. 7 and 8, reference numeral 11 indicates an opposed substrate, 12 pixel electrodes, 13 an orientation film, and 14 a liquid crystal. These liquid crystal devices are examples of an active matrix type (so-called TFT type) liquid crystal device in which a TFT (thin film transistor) is arranged for every pixel.

Liquid crystal devices for colored display are generally formed by uniting the substrate 1 on the side of the color filter and the opposed substrate 11 and enclosing the liquid crystal 14 in a space between both substrates. On the inside of the opposed substrate 11, TFTs (not illustrated) and the transparent pixel electrodes 12 are formed in the form of a matrix. On the inside of the transparent substrate 1, the colored layer 3 of the color filter is provided in such a manner that colored portions of R, G and B are arranged at positions opposite to the pixel electrodes 12. The transparent electroconductive film (common electrode) 6 is formed onto the whole surface of the colored layer. The black matrix 2 is generally formed on the side of the color filter, but formed on the side of the opposed substrate 11 in a liquid crystal device of the BM on array type. The orientation films 6 and 13 are further formed on the respective insides of both substrates. Liquid crystal molecules can be aligned or oriented in a fixed direction by subjecting these films to a rubbing treatment. These substrates are arranged in opposed relation to each other through the spacer 10 and laminated with a sealant (not illustrated). The liquid crystal 14 is filled in a space between both substrates. For the liquid crystal, any of a commonly used TN type liquid crystal, ferroelectric liquid crystal, etc. may be used.

In the case where the liquid crystal device is of a transmission type, polarizing plates are arranged on the outsides of both substrates, and a back light generally composed of a combination of a fluorescent lamp and a scattering plate is used, or in the case where the liquid crystal device is of a reflection type, a polarizing plate is arranged on the outside of the transparent substrate 1. In each case, the liquid crystal 14 functions as an optical shutter for changing the transmittance of light, thereby conducting display.

Although the TFT type liquid crystal devices have been described in the above embodiments. However, the present invention is also preferably applied to liquid crystal devices of other drive types such as the simple matrix type. The liquid crystal devices according to the present invention are suitably used in both direct viewing type and projection type.

A spacer-forming material according to another embodiment will hereinafter be described.

As the spacer-forming material, may be used a bead-containing spacer-forming material in which beads are dispersed in an adhesive.

The bead-containing spacer-forming material according to the present invention is formed into the spacer 10 by applying it onto the color filter and then curing the adhesive to fix the beads to the color filter.

For the bead-containing spacer-forming material according to the present invention, a ratio of the specific gravity of the beads to the specific gravity of the adhesive is 0.9 to 1.1, desirably 0.95 to 1.05 from the viewpoint of preventing the precipitation or flotation of the beads in the spacer-forming material.

For the beads contained in the bead-containing spacer-forming material according to the present invention, those having a particle diameter of 0.8 to 10 µm are preferably used from the viewpoint of holding a cell gap in the resulting liquid crystal device, and they are contained in a proportion of preferably 0.1 to 50 % by weight, more preferably 1 to 30 % by weight in the spacer-forming material.
Further, the viscosity of the adhesive is adjusted to preferably 2 to 100 cp, more preferably 3 to 50 cp at 25°C from the viewpoint of successfully ejecting the spacer-forming material.

For the beads used in the bead-containing spacer-forming material according to the present invention, may preferably used porous bodies, nonporous bodies and hollow bodies of inorganic compounds such as glass, silica and metal oxides (MgO, Al₂O₃, etc.), and plastics such as polystyrene, polyethylene, polypropylene, polyesters, polyacrylics, nylons and silicone resins. In particular, beads of a porous material may be suitably selected, thereby conducting the adjustment of the specific gravity.

The adhesives used in the bead-containing spacer-forming material according to the present invention is cured after the bead-containing spacer-forming material is applied onto the color filter, so as to fix the beads, and a resin composition capable of curing by light irradiation, heat treatment or a combination thereof is preferably used. Specifically, the curable, spacer-forming material described above may be used.

For the ink-jet system used in the application of the bead-containing spacer-forming material, a piezo-jet type making use of a piezoelectric element, or the like may be preferably used. The shot-in position and shot-in quantity of the bead-containing spacer-forming material may be arbitrarily preset.

For the spacer-forming material 9, a material that contains a polymer, copolymer or monomer component as a curable component curable by light irradiation or heat treatment and that is prepared at a high concentration in which the content of a solvent component is not higher than 50 % by weight may be used. The solvent component contained in the spacer-forming material 9 is lessened to prepare a high-concentration material as described above, whereby the enough height of a droplet required for the spacer can be achieved upon application of the spacer-forming material onto the color filter by an ink-jet head, and so a spacer having a sufficient height can be formed in a narrow area. Accordingly, a spacer having a desired height can be selectively formed only over a black matrix 2 having a narrow width with ease.

The content of the solvent component is preferably not higher than 30 % by weight, more preferably not higher than 20 % by weight, and is not lower than 5 % by weight.

A specific component contained in the spacer-forming material 9 includes an acrylic resin, epoxy resin or the like. However, a component by which the viscosity of the spacer-forming material does not become very high is preferred taking its ejectability by the ink-jet system into consideration, and so a monomer or oligomer material curable by light irradiation or heat treatment is preferred. Specifically, monomers or oligomers having at least two ethylenically unsaturated bonds, monomers or oligomers having at least two glycidyl groups, and the like are included. However, such components are not limited thereto.

When the spacer-forming material is cured by light, various kinds of photosetting resins and photopolymerization initiators may be added thereto. In addition, various kinds of commercially-available resins and additives may be added as other components so far as they do not cause problems of crusting and the like in the spacer-forming material.

The respective components described above are mixed and dissolved in water and/or a publicly known solvent when preparing the spacer-forming material 9. In this process, those known *per se* in the art may be used. Desirably, an additive solvent or an additive such as a surfactant is added according to the material of the surface, on which the spacer 10 is formed, to control the diameter of a dot formed by the spacer-forming material 9 ejected, whereby the diameter of the spacer 10 can be controlled.

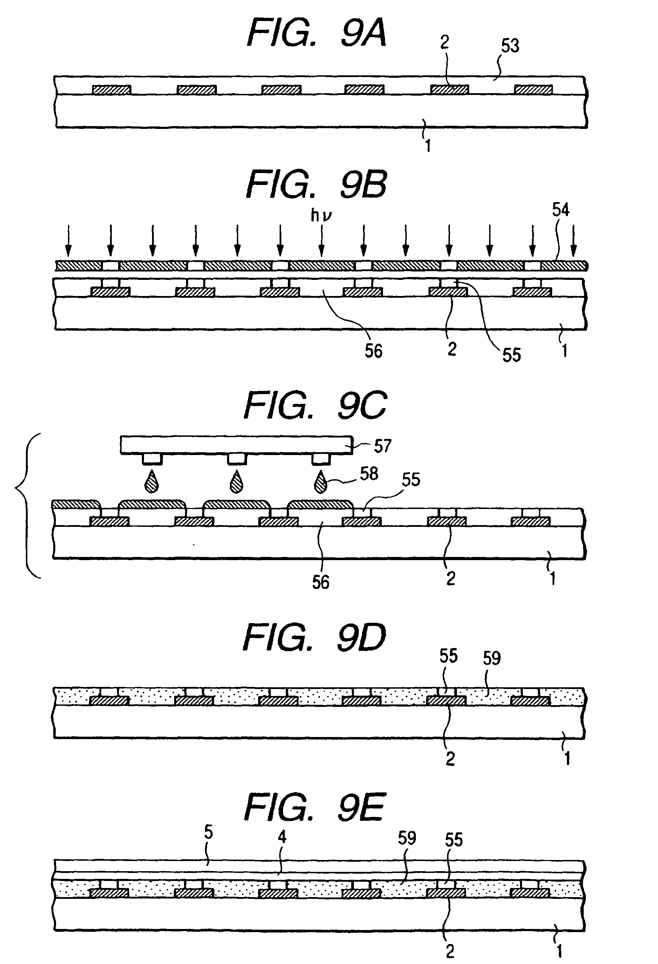

A preferable embodiment of a production process of a spacer-bearing color filter, in which a colored layer of the color filter is formed by an ink-jet system, will hereinafter be described with reference to Figs. 9A to 9G.

Incidentally, Figs. 9A to 9G correspond to the following Steps (a) to (g), respectively.

### Step (a):

A black matrix 2 is formed as a shading layer having apertures on a transparent substrate 1, and an ink-receiving layer 53 composed of a resin composition is formed on the whole surface thereof

The ink-receiving layer 53 is composed of a resin composition curable by light irradiation, heat treatment, or both light irradiation and heat treatment and has ink absorbency. Particularly preferably, the ink-receiving layer 53 is formed by a photosensitive resin composition, the ink absorbency of which is increased or decreased by light irradiation, to form non-coloring portions 55 between adjacent coloring portions 56 by patterning exposure which will be described subsequently, thereby preventing color mixing. For such a photosensitive resin composition, an acrylic resin, epoxy resin, amide resin, phenol resin, polystyrene resin or the like is used in combination with a photo-initiator (crosslinking agent) as needed. This embodiment is a case where a negative type photosensitive resin composition the ink absorbency of which is lowered by light irradiation is used.

The photosensitive resin composition is applied on to the transparent substrate 1 by a publicly known means such as spin coating, dip coating, roll coating, bar coating or slit coating, and prebaked as needed, thereby forming the ink-receiving layer 53.

Incidentally, the ink-receiving layer 53 is preferably such that the ink absorbency is increased or decreased by light irradiation, and at the same time the wettability by ink is also increased or decreased.

### Step (b):

Patterning exposure is conducted through a photomask 54 to form the coloring portions 56 having high ink absorbency and non-coloring portions 55 the ink absorbency of which is lower (or lost) than that of the coloring portions 56. In this embodiment, the photosensitivity of the ink-receiving layer 53 is negative, and in this case, a photomask having such an opening pattern that the width of each of the non-coloring portions 55 becomes narrower than the width of the black matrix 2 is preferably used from the viewpoint of forming colored portions 59 wider than the aperture of the black matrix 2 to prevent color skip at aperture portions of the black matrix 2.

In the case where the photosensitivity of the ink-receiving layer 53 is positive, the black matrix 2 is used as a photomask to conduct exposure from the back side of the transparent substrate 1, whereby the patterning exposure can be conducted without using any photomask.

### Step (c):

Color inks 58 of R (red), G (green) and B (blue) colors are applied to the coloring portions 56 of the ink-receiving layer according to the prescribed coloring pattern by means of an ink-jet head 57. In this embodiment, the non-coloring portions 55 low (or lost) in ink absorbency are interposed between adjacent coloring portions 56, so that the respective inks overflowed from the coloring portions 56 are repelled by the non-coloring portions 55, thereby preventing color mixing between the adjacent coloring portions 56.

For the color inks used in the present invention, both dye inks and pigment inks may be used, and any inks may be used so far as they can be ejected by an ink-jet system.

For the ink-jet system used in the present invention, a bubble-jet type using an electrothermal converter as an energy-generating element, a piezo-jet type making use of a piezoelectric element, or the like may be used. A coloring area and a coloring pattern may be arbitrarily preset.

### Step (d):

After the color inks 58 are absorbed in the respective coloring portions 56 and sufficiently diffused, the ink-receiving layer is subjected to a drying treatment as needed, and the whole surface of the ink-receiving layer is subjected to a necessary treatment such as light irradiation and/or heat treatment to cure the whole ink-receiving layer to form a colored layer composed of the non-coloring portions 55 and the colored portions 59.

### Step (e):

After a protective layer 4 is formed as needed, a transparent electroconductive film 5 which will become an electrode for driving a liquid crystal is formed.

For the transparent electroconductive film 5, ITO (indium-tin-oxide) film is generally used. Such a film can be formed by sputtering or the like.

### Step (f):

A spacer-forming material 9 is partially applied in, preferably, a region overlapping with the black matrix 2 by an ink-jet head 8.

### Step (g):

The spacer-forming material 9 is subjected to a necessary treatment such as light irradiation, heat treatment or both light irradiation and heat treatment to cure the spacer-forming material 9, thereby forming the spacer 10 to obtain a spacer-bearing color filter according to the present invention. The light irradiation and heat treatment are conducted in accordance with the respective methods known *per se* in the art.

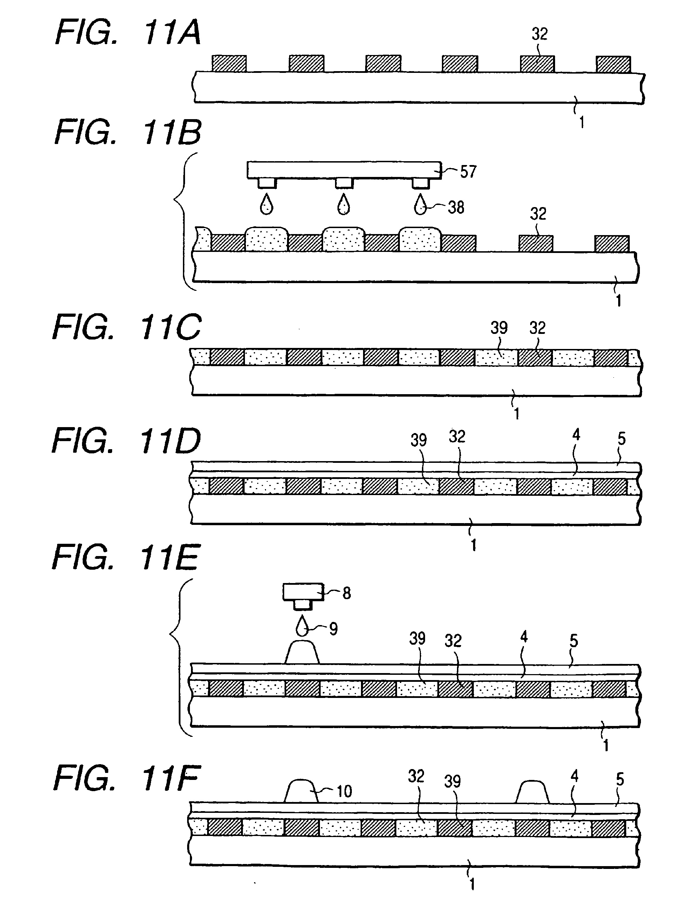

Figs 11A to 11F illustrate steps of a production process of a spacer-bearing color filter according to another embodiment of the present invention. In Figs. 11A to 11F, like reference numerals are given to the same members as in Figs. 9A to 9G, and their descriptions are omitted. In Figs. 11A to 11F, reference numeral 32 indicates a black matrix, 57 an ink-jet head, 38 curable color inks, and 39 colored portions. Incidentally, Figs. 11A to 11F correspond to the following Steps (a) to (f), respectively.

### Step (a):

A black matrix 32 having apertures is formed with a black resin composition on a transparent substrate 1. The black matrix 32 has a function as a partition wall for preventing color mixing between curable color inks 38 used for forming colored portions 39.

For such a black resin composition, a composition having photosensitivity is preferred. Specifically, an acrylic resin, epoxy resin, amide resin, phenol resin, polystyrene resin or the like is used in combination with a photo-initiator (crosslinking agent) as needed, and a black dye or pigment is mixed therewith before use.

After the photosensitive black resin composition is applied on to the transparent substrate 1 by a publicly known means' such as spin coating, dip coating, roll coating, bar coating or slit coating, and prebaked as needed, patterning exposure and development are conducted to obtain the black matrix 32 having prescribed pattern.

### Step (b):

Curable color inks 38 are applied to the apertures of the black matrix 32. For the curable color inks 38, colored resin compositions comprising a resin curable by application of energy, such as light irradiation or heat treatment, and a dye or pigment of R, G or B color are used. For the resin, may be used a melamine resin; a hydroxyl group- or carboxyl group-containing polymer and melamine; a hydroxyl group- or carboxyl group-containing polymer and a polyfunctional epoxy compound; a hydroxyl group- or carboxyl group-containing polymer and a reactive cellulose compound; an epoxy resin and a resol resin; an epoxy resin and an amine; an epoxy resin and a carboxylic acid or an acid anhydride; an epoxy compounds; or a negative resist.

For the ink-jet system, a bubble-jet type using an electrothermal converter as an energy-generating element, a piezo-jet type making use of a piezoelectric element, or the like may be used like the application of the color inks in the above embodiment. A coloring pattern may be arbitrarily preset.

### Step (c):

The inks applied are subjected to a drying treatment as needed, and then a necessary treatment such as light irradiation and/or heat treatment to cure the curable color inks 38, thereby forming colored portions 39. In this embodiment, the colored portions 39 corresponds to the colored layer of the color filter.

### Step (d):

After a protective layer 4 is formed as needed like Fig. 9E, a transparent electroconductive film 5 is formed.

### Step (e):

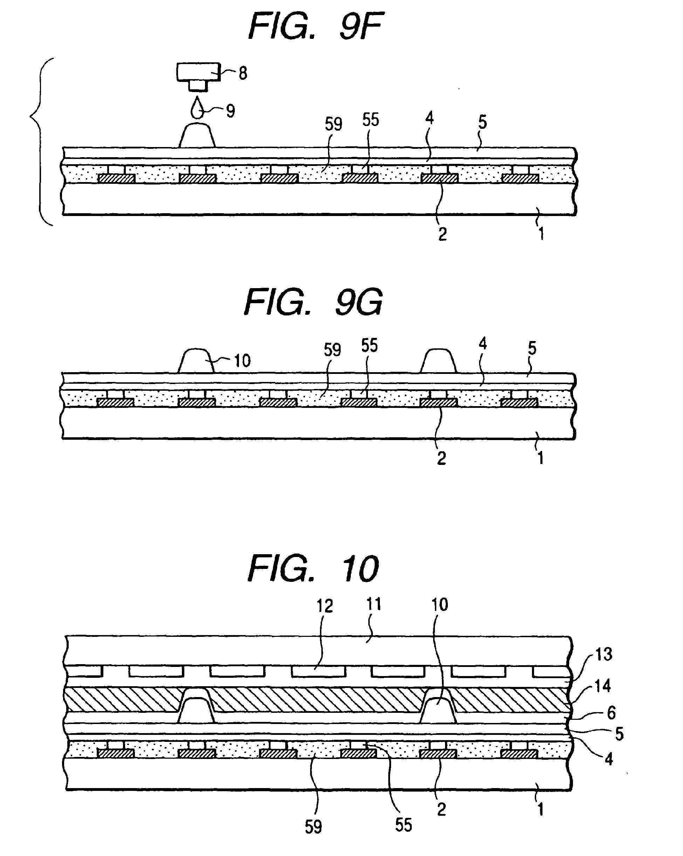

As with Fig. 9F, a spacer-forming material 9 is partially applied in, preferably, a region overlapping with the black matrix 2 by an ink-jet head 8.

### Step (f):

The spacer-forming material 9 is subjected to a necessary treatment in the same manner as in Fig. 9G to cure the spacer-forming material 9, thereby forming the spacer 10 to obtain a spacer-bearing color filter according to the present invention.

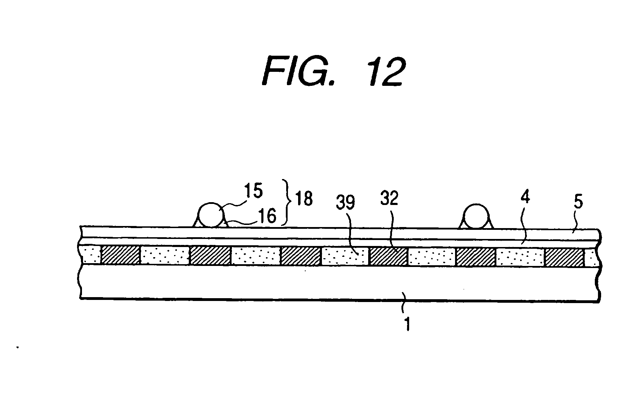

Fig. 12 schematically illustrates an exemplary spacer-bearing color filter in which a spacer 18 has been formed with a bead-containing spacer-forming material. According to this spacer 18, beads 15 are fixed to a transparent electroconductive film 5 with an adhesive 16.

Fig. 10 is a schematic cross-sectional view illustrating an exemplary liquid crystal device using the spacer-bearing color filter according to the present invention.

A spacer-forming material of a positive or negative type photosensitive resin composition/is apply onto the color filter, and then the spacer-forming material which has spread too much is then subjected to patterning exposure and developed, whereby an unnecessary portion of the spacer may be removed. According to this process, a spacer having a proper size can be formed.

The present invention will hereinafter be described more specifically by the following EXAMPLEs.

### Comparative EXAMPLE 1:

A metal chromium film having a thickness of 0.1 µm was formed on a glass substrate by sputtering and etched by using a photoresist, thereby obtaining a lattice black matrix. Thereafter, a colored layer composed of colored patterns of R, G and B was formed by using a publicly known process for forming a color filter by an ink-jet system. A protective layer composed of an acrylic resin was formed thereon by means of a spin coater to conduct smoothing. An ITO film as a transparent electrode was further formed thereon by sputtering, and an orientation film composed of polyimide was further formed thereon. A curable, spacer-forming material having the following composition was ejected to this substrate onto the black matrix by an ink-jet head as illustrated in Fig. 1F.

### [Composition of curable, spacer-forming material]

| | |
|---|---|
| Copolymer | 10 % by weight |
| Water | 80 % by weight |
| Ethylene glycol | 10 % by weight. |

The copolymer used in the above composition was a bipolymer of N,N-dimethylolacrylamide and methyl methacrylate (copolymerization ratio = 40:60 by weight).

The above-prepared substrate was heated at 100°C for 15 minutes, and then at 200°C for 30 minutes to cure the curable, spacer-forming material, thereby forming a spacer.

The substrate on which the spacer had been formed and a substrate on which opposed electrodes had been formed were laminated with a sealant to fabricate a cell. A liquid crystal was filled into the cell to obtain a liquid crystal device. The liquid crystal device thus obtained was less in color irregularity and excellent in contrast compared with a liquid crystal device in which spacers having a diameter of 6 µm are dispersed.

### EXAMPLE according to the invention:

A metal chromium film having a thickness of 0.1 µm was formed on a glass substrate by sputtering and etched by using a photoresist, thereby obtaining a lattice black matrix. Thereafter, a colored layer composed of colored patterns of R, G and B was formed by using a publicly known process for forming a color filter by an ink-jet system. A protective layer composed of an acrylic resin was formed thereon by means of a spin coater to conduct smoothing. An ITO film as a transparent electrode was further formed thereon by sputtering. A curable, spacer-forming material having the following composition was ejected to this substrate onto the black matrix by an ink-jet head. Incidentally, an orientation film composed of polyimide was formed after the formation of the spacer.

### [Composition of curable, spacer-forming material]

| | |
|---|---|
| Copolymer | 10 % by weight |
| Water | 80 % by weight |
| Ethylene glycol | 10 % by weight. |

The copolymer used in the above composition was a bipolymer of N,N-dimethylolacrylamide and methyl methacrylate (copolymerization ratio = 40:60 by weight).

In this example according to the invention, the curable, spacer-forming material was ejected 3 times to form the spacer. In this case, the spacer-forming material was ejected on the substrate in an amount of 20 ng for the first ejection, 15 ng for the second ejection and 10 ng for the third ejection, thereby forming a spacer in a substantially trapezoid form in section as illustrated in Fig. 3

The above-prepared substrate was heated at 100°C for 15 minutes, and then at 200°C for 30 minutes to cure the curable, spacer-forming material, thereby forming the spacer. The spacer had a thickness of 5 µm and a diameter of about 20 µm.

The substrate on which the spacer had been formed and a substrate on which opposed electrodes had been formed were laminated with a sealant to fabricate a cell. A liquid crystal was filled into the cell to obtain a liquid crystal device according to the present invention. The liquid crystal device thus obtained was less in color irregularity and excellent in contrast compared with a conventional liquid crystal device in which spacers having a diameter of 6 µm are dispersed.

### Comparative EXAMPLE 2:

A metal chromium film having a thickness of 0.1 µm was formed on a glass substrate by sputtering and etched by using a photoresist, thereby obtaining a lattice black matrix. Thereafter, a colored layer composed of colored patterns of R, G and B was formed by using a publicly known process for forming a color filter by an ink-jet system. A protective layer composed of an acrylic resin was formed thereon by means of a spin coater to conduct smoothing. An ITO film as a transparent electrode was further formed thereon by sputtering. A curable, spacer-forming material having the following composition was ejected to this substrate at a position opposed to each element of the black matrix by an ink-jet head. In this example, an ink-jet head that can eject the spacer-forming material in a larger amount than the ink-jet head used in EXAMPLE 1 was used.

### [Composition of curable, spacer-forming material]

| | |
|---|---|
| Copolymer | 10 % by weight |
| Water | 80 % by weight |
| Ethylene glycol | 10 % by weight. |

The copolymer used in the above composition was a bipolymer of N,N-dimethylolacrylamide and methyl methacrylate (copolymerization ratio = 40:60 by weight).

The above-prepared substrate was heated at 100°C for 15 minutes, and then at 200°C for 30 minutes to cure the curable, spacer-forming material, thereby forming a spacer.

The top of the cured spacer was then abraded by such an abrading device as illustrated in Fig. 4, thereby flattening the top into a flat surface having an average area of about 100 µm². The height of the spacer was controlled to 5 µm.

The spacer-bearing substrate the spacer of which had been abraded was immersed in an ultrasonic cleaning bath to apply ultrasonic wave of 100 kHz and 250 W for 1 minute thereto, thereby cleaning the substrate. An orientation film was further formed thereon, followed by baking and a rubbing treatment.

The substrate on which the spacer had been formed and a substrate on which opposed electrodes had been formed were laminated with a sealant to fabricate a cell. A liquid crystal was filled into the cell to obtain a liquid crystal device. The liquid crystal device thus obtained was less in color irregularity and excellent in contrast compared with a liquid crystal elemental device in which spacers having a diameter of 6 µm are dispersed.

### Comparative EXAMPLE 3:

A resin composition comprising 97 parts by weight of an acrylic terpolymer having the following composition and 3 parts by weight of triphenylsulfonium hexafluoroantimonate dissolved in ethyl cellosolve was applied onto a glass substrate, on which a lattice black matrix (aperture size: 60 µm × 150 µm) having a width of 20 µm and a length of 35 µm had been formed with chromium, by spin coating so as to give a film thickness of 2 µm, followed by prebaking at 90°C for 20 minutes, thereby forming an ink-receiving layer.

### [Composition of acrylic terpolymer]

| | |
|---|---|
| methyl methacrylate | 50 parts by weight |
| hydroxyethyl methacrylate | 30 parts by weight |
| N-methylolacrylamide | 20 parts by weight. |

The ink-receiving layer was subjected to patterning exposure in the form of stripe at part of the ink-receiving layer on the black matrix through a photomask having stripe openings each having a width narrower than that of the black matrix, and then subjected to a heat treatment for 1 minute on a hot plate heated to 120°C. Dye inks of R (red), G (green) and B (blue) colors were applied to unexposed portions of the ink-receiving layer by means of an ink-jet recording apparatus, thereby coloring the ink-receiving layer in the form of stripe with continuous dots. The inks were then dried at 90°C for 5 minutes. The substrates thus colored was subsequently subjected to a heat treatment at 200°C for 60 minutes to cure the whole ink-receiving layer, thereby obtaining a colored layer.

A two-pack type thermosetting resin composition ("SS6699G", trade name, product of JSR Co., Ltd.) was spin-coated on the colored layer so as to give a film thickness of 1 µm and prebaked at 90°C for 30 minutes. The thus-formed film was heat-treated at 250°C for 60 minutes to form a protective layer. An ITO film was then formed by sputtering so at to give a thickness of 1,500 Å, thereby obtaining a color filter.

Beads (divinylbenzene-crosslinked polystyrene; specific gravity: 1.02) having a particle diameter of 5.5 µm were dispersed in an adhesive (specific gravity: 0.98) composed of 10 % by weight of a bipolymer of N,N-dimethylolacrylamide and methyl methacrylate (weight ratio = 40:60), 80 % by weight of water and 10 % by weight of ethylene glycol in such a manner that the content of the beads in a spacer-forming material was 10 % by weight, thereby preparing a bead-containing spacer-forming material. The viscosity of this spacer-forming material was 19 cp at 25°C. The bead-containing spacer-forming material was applied onto the ITO film by an ink-jet head in such a manner that the beads were partially arranged in a region overlapping with the black matrix. The beads were uniformly dispersed in the spacer-forming material in this application step and have been applied to desired positions on the black matrix. The thus-treated substrate was subjected to an additional heat treatment at 150°C for 20 minutes to cure the adhesive, thereby fixing the beads to the ITO film to obtain a spacer-bearing color filter.

The spacer-bearing color filter thus obtained was used to fabricate a liquid crystal device for color display. As a result, a good color image was displayed.

### Comparative EXAMPLE 4:

A resin composition comprising 97 parts by weight of an acrylic terpolymer having the following composition, and 3 parts by weight of triphenylsulfonium hexafluoroantimonate dissolved in ethyl cellosolve was applied onto a glass substrate, on which a lattice black matrix (aperture size: 100 µm x 300 µm) having a width of 20 µm and a length of 40 µm had been formed with chromium, by spin coating so as to give a film thickness of 2 µm, and prebaked at 90°C for 20 minutes, thereby forming an ink-receiving layer.

### [Composition of acrylic terpolymer]

| | |
|---|---|
| methyl methacrylate | 50 parts by weight |
| hydroxyethyl methacrylate | 30 parts by weight |
| N-methylolacrylamide | 20 parts by weight. |

The ink-receiving layer was subjected to patterning exposure in the form of stripe at part of the ink-receiving layer on the black matrix through a photomask having stripe openings each having a width narrower than that of the black matrix, and then subjected to a heat treatment for 1 minute on a hot plate heated to 120°C. Dye inks of R (red), G (green) and B (blue) colors were applied to unexposed portions of the ink-receiving layer by means of an ink-jet recording apparatus, thereby coloring the ink-receiving layer in the form of stripe with continuous dots. The inks were then dried at 90°C for 5 minutes. The substrates thus colored was subsequently subjected to a heat treatment at 200°C for 60 minutes to cure the whole ink-receiving layer, thereby obtaining a colored layer.

A two-pack type thermosetting resin composition ("SS6699G", trade name, product of JSR Co., Ltd.) was spin-coated on the colored layer so as to give a film thickness of 1 µm and prebaked at 90°C for 30 minutes. The thus-formed film was heat-treated at 250°C for 60 minutes to form a protective layer. An ITO film was then formed by sputtering so at to give a thickness of 150 nm, thereby obtaining a color filter.

A spacer-forming material having the following composition was applied in an amount of 5 pl per position onto the color filter thus obtained in a region overlapping with the black matrix by an ink-jet system. The spacer-forming material thus applied was subjected to a heat treatment to cure.

### [Composition of curable, spacer-forming material]

| | |
|---|---|
| Polypropylene/glycol diglycidyl ether ("EX-920", product of Nagase Chemicals, Ltd.) | 80 % by weight |
| Water | 20 % by weight. |

The spacer thus obtained was in a substantially cylindrical form having a diameter of 20 µm and a height of 5 µm.

The spacer-bearing color filter thus obtained was used to fabricate a liquid crystal device. As a result, no influence of the spacer on display was exerted, and so a good display was realized.

## Claims

1. A process for producing a spacer-bearing substrate, which comprises the step of forming a spacer on a substrate by an ink-jet system, **characterised in that** the step of forming the spacer includes applying a spacer-forming material a plurality of times to be piled up on the substrate to form the spacer.

2. The process according to Claim 1, wherein the substrate on which the spacer is formed has a colored layer

3. The process according to Claim 1 or 2, further comprising a step of flattening the top of the spacer.

4. A process for producing a liquid crystal device comprising a pair of substrates (1, 11) arranged in opposed relation to each other through a spacer (10) and a liquid crystal compound (14) held in a space between the substrates, said process comprising the steps of
producing a spacer-bearing substrate according to claim 1;
arranging another substrate in opposed relation to the spacer-bearing substrate with the spacer held therebetween; and
enclosing a liquid crystal compound in the space between the pair of substrates.

5. The process according to Claim 4, wherein the substrate on which the spacer is formed has a colored layer (3).

6. The process according to Claim 5, wherein the substrate on which the spacer is formed has a black matrix (2).

7. The process according to Claim 6, wherein the spacer-forming material is applied to a position overlapping with the black matrix.

8. The process according to any one of Claims 4 to 7, wherein the spacer-forming material comprises an adhesive and beads dispersed in the adhesive.

9. The process according to Claim 8, wherein the ratio of the specific gravity of the beads to the specific gravity of the adhesive is 0.9 to 1.1.

10. The process according to Claims 8 or 9, wherein the beads have a particle diameter of 0.8 to 10 µm, and the adhesive has a viscosity of 2 to 100 cp at 25 °C.

11. The process according to any one of Claims 4 to 10, wherein the spacer-forming material comprises a curable component curable by light or heat and a solvent component, and the content of the solvent component is at most 50 % by weight.

12. The process according to any one of Claims 4 to 11, wherein the amount of the spacer-forming material applied in and after the second time is smaller than the amount of the spacer-forming material applied in the first time.

13. The process according to any one of Claims 4 to 12, wherein the spacer-forming material applied earlier is cured, and then the next spacer-forming material is applied thereon.

14. The process according to any one of Claims 4 to 13, further comprising a step of flattening the top of the spacer.

## Patentansprüche

1. Verfahren zur Herstellung eines Abstandsglied-tragenden Substrats, umfassend den Schritt zum Bilden eines Abstandsglieds auf einem Substrat mit Hilfe eines Tintenstrahl-Systems;
**dadurch gekennzeichnet, dass**
in diesem Schritt ein Abstandsglied-bildendes Material auf dem Substrat mehrmals übereinander aufgebracht wird, um das Abstandsglied zu bilden.

2. Verfahren nach Anspruch 1, bei dem
das Substrat, auf dem das Abstandsglied gebildet wird, eine farbige Schicht besitzt.

3. Verfahren nach Anspruch 1 oder 2, außerdem umfassend
einen Schritt zum Abflachen der Oberseite des Abstandsglieds.

4. Verfahren zur Herstellung einer Flüssigkristallvorrichtung, umfassend ein Paar Substrate (1, 11), die über ein Abstandsglied (10) einander gegenüberstehend angeordnet sind, sowie eine im Raum zwischen den Substraten gehaltene Flüssigkristallverbindung (14), wobei das Verfahren die Schritte umfasst:
Herstellen eines Abstandsglied-tragenden Substrats nach Anspruch 1;
Anordnen eines weiteren Substrats gegenüberstehend dem Abstandsglied-tragenden Substrat, wobei das Abstandsglied dazwischen gehalten wird; und
Einschließen einer Flüssigkristallverbindung in dem Raum zwischen dem Paar Substrate.

5. Verfahren nach Anspruch 4, bei dem
das Substrat, auf dem das Abstandsglied gebildet wird, eine farbige Schicht (3) besitzt.

6. Verfahren nach Anspruch 5, bei dem
das Substrat, auf dem das Abstandsglied gebildet wird, eine Schwarz-Matrix (2) besitzt.

7. Verfahren nach Anspruch 6, bei dem
das Abstandsglied-bildende Material an einer die Schwarz-Matrix überlappenden Position aufgebracht wird.

8. Verfahren nach einem der Ansprüche 4 bis 7, bei dem
das Abstandsglied-bildende Material einen Klebstoff sowie darin dispergierte Perlpartikel umfasst.

9. Verfahren nach Anspruch 8, bei dem
das spezifische Gewicht der Perlpartikel zum dem des Klebstoffs im Verhältnis 0.9 bis 1.1 steht.

10. Verfahren nach Anspruch 8 oder 9, bei dem
die Perlpartikel einen Teilchendurchmesser von 0.8 bis 10 µm haben, und der Klebstoff eine Viskosität von 2 bis 100 cp bei 25°C besitzt.

11. Verfahren nach einem Ansprüche 4 bis 10, bei dem
das Abstandsglied-bildende Material eine durch Licht oder Wärme aushärtbare Komponente sowie eine Lösungsmittelkomponente umfasst, und letztere mit höchstens 50 Gewichts % zugegen ist.

12. Verfahren nach einem Ansprüche 4 bis 11, bei dem
die Menge des Abstandsglied-bildenden Materials, die beim und nach dem zweiten Mal aufgebracht wird, kleiner ist als die beim ersten Mal aufgebrachte Menge.

13. Verfahren nach einem Ansprüche 4 bis 12, bei dem
das früher aufgebrachte Abstandsglied-bildende Material ausgehärtet wird, und darauf dann das nächste Abstandsglied-bildende Material aufgebracht wird.

14. Verfahren nach einem Ansprüche 4 bis 13, außerdem umfassend
einen Schritt zum Abflachen der Oberseite des Abstandsglieds.

## Revendications

1. Procédé de production d'un substrat portant un élément d'espacement, qui comprend l'étape consistant à former un élément d'espacement sur un substrat par le biais d'un système à jet d'encre, **caractérisé en ce que** l'étape de formation de l'élément d'espacement comprend l'application d'un matériau de formation d'élément d'espacement une pluralité de fois pour l'empiler sur le substrat pour former l'élément d'espacement.

2. Procédé selon la revendication 1, dans lequel le substrat sur lequel l'élément d'espacement est formé comporte une couche colorée.

3. Procédé selon la revendication 1 ou 2, comprenant en outre une étape consistant à aplatir la partie supérieure de l'élément d'espacement.

4. Procédé de production d'un dispositif à cristaux liquides comprenant une paire de substrats (1, 11) disposés suivant une relation opposée l'un par rapport à l'autre par l'intermédiaire d'un élément d'espacement (10) et un composé de cristaux liquides (14) maintenu dans un espace entre les substrats, ledit procédé comprenant les étapes consistant à :
produire un substrat portant un élément d'espacement conforme à la revendication 1,
disposer un autre substrat suivant une relation opposée par rapport au substrat portant l'élément d'espacement, l'élément d'espacement étant maintenu entre eux, et
enfermer un composé de cristaux liquides dans l'espace entre la paire de substrats.

5. Procédé selon la revendication 4, dans lequel le substrat sur lequel l'élément d'espacement est formé comporte une couche colorée (3).

6. Procédé selon la revendication 5, dans lequel le substrat sur lequel l'élément d'espacement est formé comporte une matrice noire (2).

7. Procédé selon la revendication 6, dans lequel le matériau de formation d'élément d'espacement est appliqué à une position chevauchant la matrice noire.

8. Procédé selon l'une quelconque des revendications 4 à 7, dans lequel le matériau de formation d'élément d'espacement comprend un adhésif et des perles dispersées dans l'adhésif.

9. Procédé selon la revendication 8, dans lequel le rapport de la masse volumique des perles sur la masse volumique de l'adhésif est de 0,9 à 1,1.

10. Procédé selon la revendication 8 ou 9, dans lequel les perles ont un diamètre de particule de 0,8 à 10 µm et l'adhésif présente une viscosité de 2 à 100 cP à 25 °C.

11. Procédé selon l'une quelconque des revendications 4 à 10, dans lequel le matériau de formation d'élément d'espacement comprend un composant durcissable, durcissable par la lumière ou la chaleur et un composant de solvant, et la teneur du composant de solvant est au plus de 50 % en poids.

12. Procédé selon l'une quelconque des revendications 4 à 11, dans lequel la quantité de matériau de formation d'élément d'espacement appliquée la seconde fois et ensuite est plus petite que la quantité du matériau de formation d'élément d'espacement appliquée la première fois.

13. Procédé selon l'une quelconque des revendications 4 à 12, dans lequel le matériau de formation d'élément d'espacement appliqué précédemment est durci, et ensuite le matériau de formation d'élément d'espacement suivant est appliqué sur celui-ci.

14. Procédé selon l'une quelconque des revendications 4 à 13, comprenant en outre une étape d'aplatissement de la partie supérieure de l'élément d'espacement.
